Europäisches Patentamt

European Patent Office

Office européen des brevets

(11) Veröffentlichungsnummer: **0 462 609 A1**

# (12) EUROPÄISCHE PATENTANMELDUNG

(21) Anmeldenummer: **91110157.4**

(22) Anmeldetag: **20.06.91**

(51) Int. Cl.⁵: **E04H 5/06**, B60S 5/00

(30) Priorität: **21.06.90 DE 4019779**

(43) Veröffentlichungstag der Anmeldung:
**27.12.91 Patentblatt 91/52**

(84) Benannte Vertragsstaaten:
**AT CH DE LI**

(71) Anmelder: **Rhein-Bayern Fahrzeugbau GmbH & Co. KG**
**Gewerbestrasse 61**
**W-8950 Kaufbeuren(DE)**

(72) Erfinder: **Werner, Wilfried**
**Hüttenstrasse 16d**
**W-8950 Kaufbeuren 2(DE)**

(74) Vertreter: **Hübner, Hans-Jürgen, Dipl.-Ing.**
**Mozartstrasse 31**
**W-8960 Kempten/Allgäu(DE)**

(54) **Abdeckung für längliche Montagegruben.**

(57) Eine Montagegrube (10) wird mit einem Traggliederband (14) verschlossen, das mittels Laufrollen auf Randschienen (12) der Grube abrollbar gelagert und mittels eines Kettenantriebes in Offenstellung bewegt werden kann, in welcher das Traggliederband (14) in einer Speichereinheit (18) an einem Grubenende auf vorgegebener Bewegungsbahn geführt ist. Die Speichereinheit (18) umfaßt zwei seitliche U-förmige Bahnabschnitte (30), in denen Führungsrollen des Traggliederbandes (14) geführt sind. Die Speichereinheit (18) und die Antriebseinheit bilden eine vormontierbare Baueinheit, die in einen vertieften Schacht (16) am Ende der Grube (10) eingestellt wird.

FIG.1

EP 0 462 609 A1

Die Erfindung betrifft eine Abdeckung für längliche Montagegruben bestehend aus einer Anzahl Tragglieder, die endseitige Führungsrollen aufweisen und die durch zwei bodenseitige Ketten miteinander zu einem Gliederband verbunden sind, das in seiner Schließstellung auf Randschienen der Grube aufliegt und in seiner Offenstellung an einem Grubenende in einer Speichereinheit gespeichert ist.

Eine derartige motorisch angetriebene Grubenabdeckung ist aus der GB-PS 2 060 754 bekannt. Die Speichereinheit besteht aus einer Wickeltrommel, die einen Antriebsmotor zum Aufwickeln des Gliederbandes aufweisen muß. Zum Abwickeln des Gliederbandes sind die Ketten über das freie Ende des Gliederbandes hinaus verlängert und laufen zum gegenüberliegenden Grubenende, wo ein eigener Kettenradantrieb vorgesehen ist, um das Gliederband von der Wickeltrommeln abzuwickeln und in die Abdeckstellung oberhalb der Grube zu ziehen. Die Führungsrollen sind nicht unmittelbar an den Enden der Tragglieder sondern an in diese teleskopartig einschiebbaren Endstücken gelagert und dienen dazu, an Rampen aufzulaufen, um die Endstücke in die Tragglieder hineinzuschieben, sodaß die Speichereinheit schmaler ausgebildet werden kann und damit in die Grubenbreite hineinpaßt. Mit anderen Worten braucht die Grube für die Speichereinheit nicht verbreitert zu werden. Die Achsen der Führungsrollen verlaufen rechtwinklig zur Längsrichtung der Tragglieder.

Aus der EP-PS 115 087 ist eine sogenannte schiebende Grubenabdeckung bekannt, bei der nur ein Antriebsmotor mit Antriebswelle und Kettenrädern benötigt wird, um das Traggliederband aus der Offenstellung der Grube in die Schließstellung zu bewegen und umgekehrt. Allerdings benötigt diese Anordnung eine Schienenführung längs des Grubenbodens, auf der das Traggliederband in seiner Offenstellung ruht. Zur Aufnahme des bodenseitigen Endes des Traggliederbandes muß die Grube entsprechend tiefer gelegt werden und oberhalb des Grubenbodens und der bodenseitigen Führungsschienen muß ein Gitterrost für das Bedienungspersonal eingebaut werden. Wegen der um mindestens 200 mm zusätzlichen Vertiefung der Grube ist auch eine Grubenabsaugung nötig, die die Herstellungskosten erhöht. Schließlich erfordert die Anordnung der bodenseitigen Führungsschienen einen erheblichen Montageaufwand.

Aufgabe der Erfindung ist es, eine Grubenabdeckung der eingangs genannten Anrt zu schaffen, die eine Wickeltrommel mit eigenem Antriebsmotor für die Speichereinheit umgeht und auch die Nachteile der an zweiter Stelle erwähnten bekannt Grubenabdeckung vermeidet.

Die Aufgabe wird erfindungsgemäß dadurch gelöst, daß sich an einem Grubenende ein mindestens über die Grubenbreite reichender und gegenüber der Grube tiefer liegender Schacht befindet, in den die Speichereinheit eingreift, die an beiden Grubenseiten quer ausgerichtete Führungsanordnungen aufweist, in die die endseitigen Führungsrollen der Tragglieder eingreifen und daß jede Führungsanordnung mindestens einen U-förmigen Bahnabschnitt mit zwei durch mindestens ein bodenseitiges Bogenstück miteinander verbundenen aufrechten Schenkeln aufweist und das Bogenstück auf tieferem Niveau als der Grubenboden und nahe dem Schachtboden angeordnet ist.

Die Erfindung ermöglicht es, die längliche Grube mit einer Tiefe von z.B. nur 1,60 m auszubilden. Das Personal kann direkt auf dem Grubenboden stehen. Ein zusätzlicher Gitterrost entfällt. Auch eine Absaugung ist nicht mehr erfoderlich. Am Ende der Grube wird lediglich ein Schacht benötigt, in dem die Speichereinheit angeordnet ist. Der Schacht ist mindestens um das Tiefenmaß der Grube tiefer als diese, sodaß die beiden aufrechten Schenkel des U-förmigen Bahnabschnittes und das zugehörige Bogenstück eine Bahnlänge von ca. 8 m ergeben, was für relativ kurze Gruben ausreichend ist. Ein aufrechter Schenkel dieses U-förmigen Bahnabschnittes ist benachbart der von der Grube abgewandten Schachtstirnwand angeordnet und vorzugsweise mittels eines etwa viertelkreisförmig gebogenen Übergangsstückes an eine gerade Deckenschiene angeschlossen, die ihrerseits an die zwischen Grube und Schacht endende Randschiene der Grube bodenseitig anschließt. Im Bereich dieses Übergangsstückes befinden sich die Kettenräder, de auf einer gemeinsamen Welle sitzen, an der der Antriebsmotor angreift. Beim Schließen der Grube schieben also die beiden Kettenräder das vor ihnen liegende Trum des Gliederbandes auf die Randschienen der Grube und ziehen das hinter ihnen liegende Bandtrum aus der Speichereinheit heraus. Die Führungsanordnung der Speichereinheit sorgt dafür, daß das Gliederband beim Öffnen der Grube auf vorgegebener Bahn in die Speichereinheit hineingeführt wird.

Die Speichereinheit ist sehr einfach ausgebildet und daher kostengünstig herstellbar. Sie besteht aus zwei Seitenplatten, die gemäß einer bevorzugten Ausführungsform der Erfindung durch Querglieder miteinander zu einem Montageeinsatz verbunden sind. Die Querglieder können aus einem einstückigen Boden und einer oder mehreren Querstreben bestehen, wie es auch im Rahmen der Erfindung liegt, die beiden Seitenplatten mittels mehrerer solcher Querglieder miteinander starr zu verbinden. Eines dieser Querglieder stützt den Antriebsmotor und vorzugsweise die Lager für die Antriebswelle der Kettenräder ab. Gemäß einer anderen Ausgestaltung ist diese Antriebswelle in den beiden Seitenplatten unmittelbar gelagert. Die Führungsanordnungen können gemäß einer besonders einfachen und vorteilhaften Ausgestaltung der Erfindung in den Seitenplatten in Form von Nuten oder Schlitzen ausgebildet sein. Diese Ausführungsform hat den Vorteil, daß die Speichereinheit eine minimale Breite erhält. Alternativ liegt es im Rahmen der Erfindung, an den beiden Seitenplatten innenseitig Schienenbahnen mit U-förmigem Querschnitt anzuschweißen. Der gemeinsame Vorteil aller dieser Ausführungsformen ist, daß die Speichereinheit und die Antriebseinheit zu einer Montagegruppe zusammengefaßt sind, die eine Vormontage im Werk ermöglicht, sodaß die gesamte Baueinheit mit dem Traggliederband zu Baustelle transportiert und dort in kürzester Zeit in dem Schacht der Grube positioniert werden kann. Die Arbeiten an der Baustelle werden dadurch auf ein Minimum reduziert.

Da sich die Speichereinheit mit ihrer längsten Dimension lotrecht erstreckt, nimmt sie in Längsrichtung der Grube nur einen sehr geringen Platz ein, denn die beiden aufrechten Schenkel des U-förmigen Bahnabschnittes brauchen nur einen geringen Abstand zu haben, der durch einen ausreichend leichten Lauf innerhalb des bodenseitigen Bogenstückes bestimmt wird. Bei längeren Gruben kann man entweder den Schacht vertiefen oder - was vorgezogen wird - einen zusätzlichen aufrechten Schenkel für die Führungsanordnung vorsehen. In diesem Fall schließt sich an den grubenbenachbarten Schenkel des U-förmigen Bahnabschnittes mittels mindestens eines deckseitigen Bogenstückes dieser zusätzliche dritte aufrechte Schenkel an, der zwischen den beiden Schenkeln des U-förmigen Bahnabschnittes angeordnet ist. Der Abstand zwischen den beiden aufrechten Schenkeln des U-förmigen Bahnabschnittes braucht dafür nur geringfügig vergrößert zu werden, damit der zusätzliche dritte Schenkel und das an ihm geführte Traggliederband Platz hat. Wesentlich ist, daß die Krümmungsmittelpunkte der Bodenstücke immer der Bodenseit des Traggliederbandes zugeordnet sind, da die Gelenke des Traggliederbandes durch die Kettengelenke gebildet sind und sich diese jeweils zwischen zwei Traggliedern unter dem Traggliederboden befinden. In der geraden Stellung des Traggliederbandes berühren die Tragglieder einander oder bilden einen nur geringen Spalt. Ein mäanderförmiger Verlauf der Führungsbahn in der Speichereinheit ist also nicht möglich.

Eine Weiterbildung der Erfindung ist noch darin zu sehen, daß im Übergangsbereich zwischen dem mindestens angenähert horizontalen Verlauf der deckseitigen Führungsbahn für das Traggliederband und dem anschließenden grubenabgewandten aufrechten Schenkel des U-förmigen Bahnabschnittes eine Kettenantriebsanordnung mit Antriebsmotor vorgesehen ist, daß der Antriebsmotor dicht unter der angenähert horizontal verlaufenden deckseitigen Bewegungsbahn der Tragglieder mit wenigstens angenähert horizontaler Antriebswelle angeordnet ist und daß der dritte Schenkel vom grubenabgewandten Schenkel einen Abstand höchstens gleich dem Abstand hat, den letzterer von der Schachtstirnwand aufweist. Diese Anordnung bringt die größtmögliche Platzersparnis, da der dritte zusätzliche aufrechte Schenkel sehr nahe am grubenabgewandten Schenkel angeordnet werden kann. Das deckseitige Bogenstück liegt dann dicht unter dem Antriebsmotor, dessen Welle im wesentlichen horizontal orientiert ist.

Vorteilhafte Weiterbildungen der Erfindung bestehen noch darin, daß das bodenseitige und/oder das deckseitige Bogenstück wenigstens angenähert halbkreisförmig ausgebildet sind bzw. ist, daß die Höhe der Führungsanordnung im Schacht größer als deren in Längsrichtung der Grube gemessene Breite ist und daß die Höhe des U-förmigen Bahnabschnittes mindestens doppelt so groß wie der Abstand seiner beiden Schenkel ist. In einer bevorzugten Ausführungsform beträgt die Höhe der Speichereinheit das Zwei- bis Dreifache, deren in Grubenlängsrichtung gemessener Breite.

Anhand der Zeichnung, die ein Ausführungsbeispiel darstellt, sei die Erfindung näher beschrieben.

Es zeigt

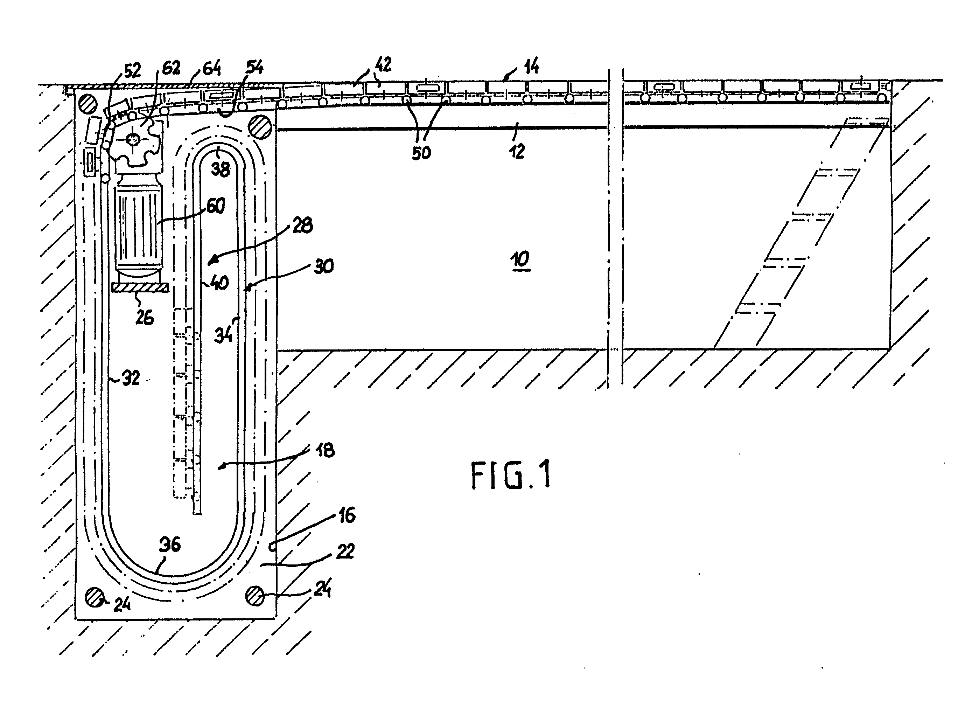

FIG. 1    einen schematischen Längsschnitt durch die neue Grubenabdeckung mit am Grubenende befindlicher Speichereinheit,

FIG. 2    einen vergrößerten Ausschnitt des oberen Endes der Speichereinheit,

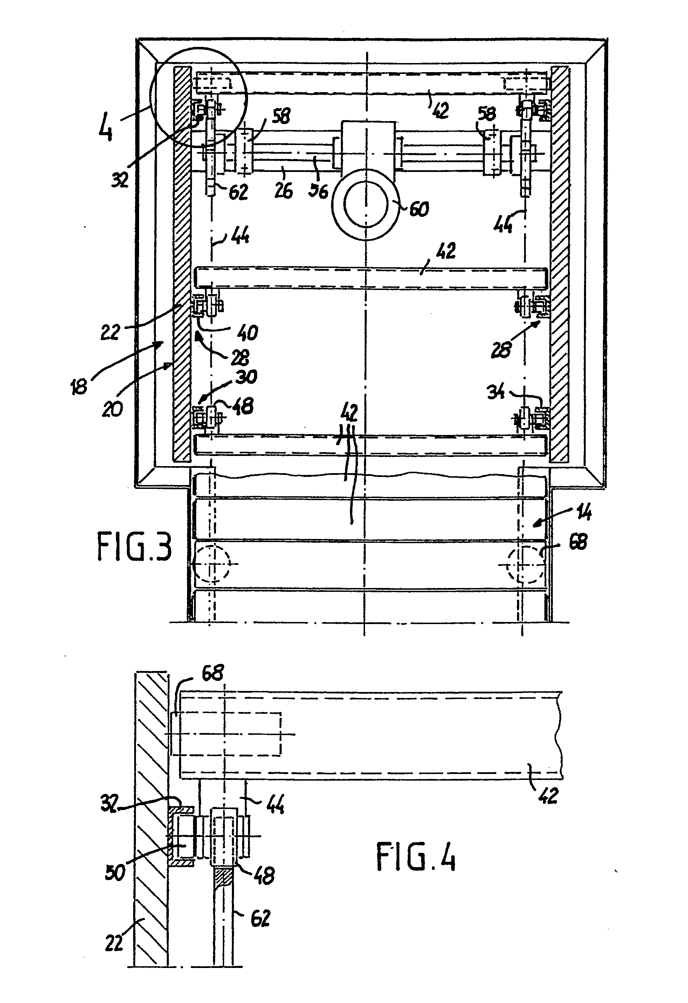

FIG. 3    eine teilweise geschnittene Draufsicht auf das die Speichereinheit umfassende Grubenende,

FIG. 4    eine vergrößerte Ansicht des Details 4 in FIG. 3,

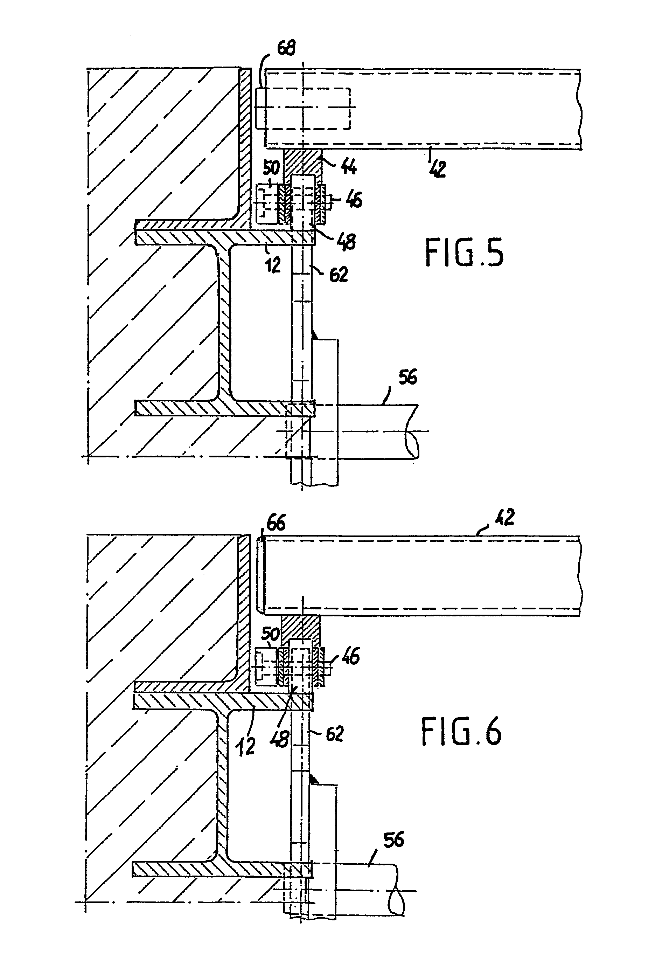

FIG. 5    einen Vertikalschnitt durch das auf den Randschienen der Grube aufliegende Traggliederband und

FIG. 6    eine Ansicht ähnlich FIG. 5, bei der das dargestellte Tragglied keine Stirnrolle aufweist.

Eine längliche Grube 10 weist nahe der oberen Längsränder jeweils eine Randschiene 12 auf, auf den beiden Randschienen 12 ist ein Traggliederband 14 abgestützt. An das Ende der Grube 10 schließt sich ein Schacht 16 mit rechteckigem Horizontalquerschnitt an, in den eine Speichereinheit 18 für das Traggliederband 14 eingesetzt ist. Die Sohle des Schachtes 16 liegt um mehr als die Grubentiefe tiefer als die Grubensohle.

Die Speichereinheit 18 besteht aus einem Montageeinsatz 20, der zwei Seitenplatten 22 aufweist, die von Querstreben 24,26 auf Abstand gehalten und starr miteinander verbunden sind. An den Innenseiten der Seitenplatten 22 befinden sich Führungsanordnungen 28, die je einen U-förmigen Bahnabschnitt 30 mit zwei aufrechten Schenkeln 32, 34 und einem diese verbindenden bodenseitigen Bogenstück 36 und weiterhin ein deckseitiges Bogenstück 38 sowie einen daran anschließenden dritten aufrechten Schenkel 40 aufweisen. Die Führungsanordnungen 28 werden durch im Querschnitt U-förmige Schienen gebildet, die innenseitig an den Seitenplatten 22 angeschweißt sind. Die U-Schenkel können auch separat an den Seitenplatten angeschweißt werden.

Das Traggliederband 14 besteht aus einer Anzahl Tragglieder 42 in Form von Kastenprofilen, die bodenseitig durch zwei Ketten 44 miteinander verbunden sind. Die Kettengelenke sind den Stoßstellen zwischen je zwei Traggliedern 42 zugeordnet. Der Gelenkbolzen 46 trägt eine Laufrolle 48 sowie an der Aussenseite der Kette 44 eine koaxiale Führungsrolle 50, die im Durchmesser kleiner ist als die Laufrolle 48. Mit den Laufrollen 48 stützt sich das Traggliederband 14 auf den Randschienen 12 der Grube 10 ab. Die Führungsrollen 50 greifen in die Schienen der Führungsanordnung 28 der Speichereinheit 18 ein. Ihr aufrechter Schenkel 32 ist mittels eines viertelkreisförmigen Übergangsstückes 52 an eine nahezu horizontale Deckenschiene 54 angeschlossen. Das Übergangsstück 52 und die Deckenschiene 54 haben denselben Querschnitt wie die Schienen der Führungsanordnung 28. Sie sind an den Seitenplatten 22 befestigt und stellen den Anschluß zu den Randschienen 12 der Grube 10 her.

Koaxial zu dem viertelkreisförmigen Übergangsstück 52 ist an der Baueinheit 20 eine querliegende Antriebswelle 56 in Lagern 58 gelagert, die ihrerseits auf der Querstrebe 26 abgestützt sind, die die beiden Seitenplatten 22 miteinander verbindet. Die Querstrebe 26 trägt auch den Antriebsmotor 60, der hier in stehender Anordnung gezeigt ist. Auf der Antriebswelle 56 sitzen zwei Kettenräder 62, deren Umfangsausnehmungen entsprechend den Laufrollen 48 konturiert sind.

Falls eine raumsparendere Anordnung der Speichereinheit 18 gewünscht wird, wird der Antriebsmotor 60 unmittelbar unter der Ebene der Deckenschienen 54 liegend angeordnet. Das deckseitige Bogenstück 38 kommt dann etwas tiefer zu liegen, jedoch kann der dritte aufrechte Schenkel 40 der Führungsanordnung 28 sehr viel näher an den grubenabgewandten aufrechten Schenkel 32 herangebracht werden.

Die die Speichereinheit 18 und die Antriebseinrichtung umfassende Baueinheit 20 wird mit dem eingefahrenen Traggliederband 14 in den Schacht 16 gestellt und ausgerichtet und - falls erforderlich - in geeigneter Weise z.B. am Schachtboden fixiert.

Weitere Montagearbeiten entfallen. Die Anlage ist sofort betriebsbereit. Der Schacht 16 wird deckseitig mittels einer Abdeckplatte 64 abgedeckt.

Die meisten Tragglieder 42 sind stirnseitig mittels Abdeckkappen 66 geschlossen. Zur Seitenführung des Traggliederbandes 14 sind einzelne Tragglieder - im Ausführungsbeispiel jedes 6. Tragglied 42 - mit stirnseitigen Rollen 68 versehen, deren Achsen rechtwinklig zur Ebene des in der Schließstellung befindlichen Traggliederbandes 14 verlaufen und die zum größten Teil innerhalb der Tragglieder angeordnet sind und nur mit einem geringen Umfangsbereich über die Stirnfläche des Traggliedes 42 vorstehen. Diese Stirnrollen 68 führen das Traggliederband seitlich zwischen den auf den Randschienen 12 befindlichen Winkelschienen der Grube und zwischen den Seitenplatten 22 der Speichereinheit 18.

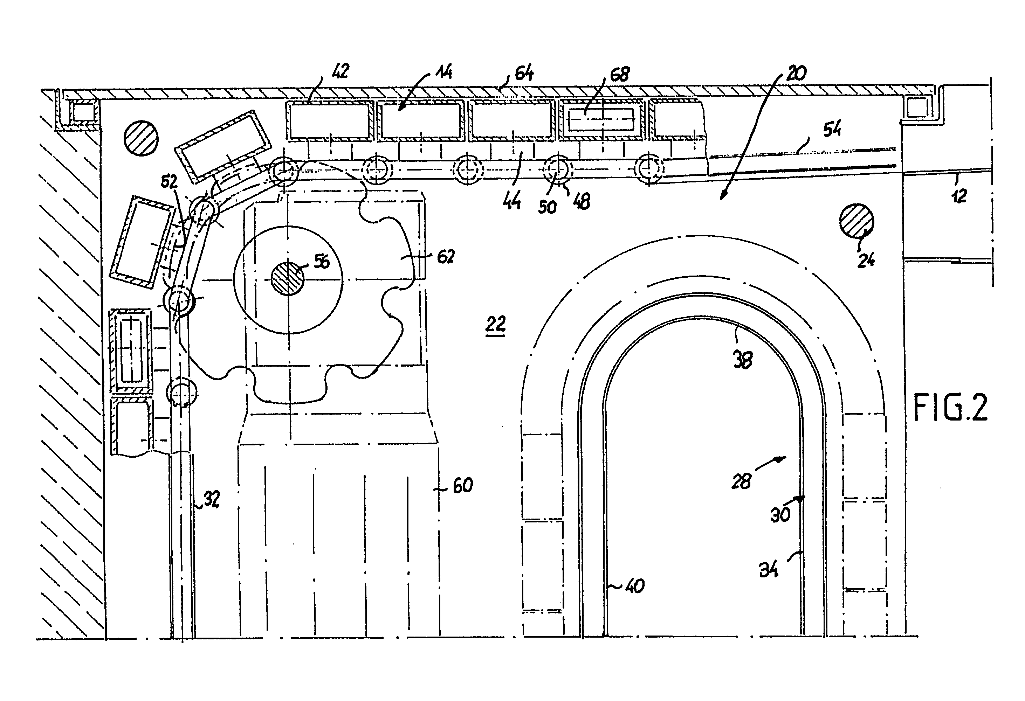

Wie aus FIG. 2 ersichtlich ist, besteht zwischen dem Bodenschenkel der Deckenschiene 54 und dem Tragschenkel der Randschiene 12 ein gewisser Höhenversatz, der den unterschiedlichen Durchmesser von Laufrolle 48 und Führungsrolle 50 Rechnung trägt. Wenn also die Laufrolle 48 auf dem Tragschenkel der Randschiene 12 aufliegt, so ist die zugehörige koaxiale Führungsrolle 50 bezüglich des Eingangs der Deckenschiene 54 ausgerichtet, sodaß ein automatisches Einfädeln der Führungsrolle 50 stattfindet.

**Patentansprüche**

1. Abdeckung für längliche Montagegruben bestehend aus einer Anzahl Tragglieder, die endseitige Führungsrollen aufweisen und die durch zwei bodenseitige Ketten miteinander zu einem Gliederband verbunden sind, das in seiner Schließstellung auf Randschienen der Grube aufliegt und in seiner Offenstellung an einem Grubenende in einer Speichereinheit gespeichert ist, dadurch gekennzeichnet, daß sich an einem Grubenende ein mindestens über die Grubenbreite reichender und gegenüber der Grube (10) tiefer liegender Schacht (16) befindet, in den die Speichereinheit (18) eingreift, die an beiden Grubenseiten quer ausgerichtete Führungsanordnungen (28) aufweist, in die die endseitigen Führungsrollen (50) der Tragglieder (42) eingreifen und daß jede Führungsanordnung (28) mindestens einen U-förmigen Bahnabschnitt (30) mit zwei durch mindestens ein bodenseitiges Bogenstück (36) miteinander verbundenen aufrechten Schenkeln (32, 34) aufweist und das Bogenstück (36) auf tieferem Niveau als der Grubenboden und nahe dem Schachtboden angeordnet ist.

2. Abdeckung nach Anspruch 1, dadurch gekennzeichnet, daß ein aufrechter Schenkel (32) benachbart der von der Grube (10) abgewandten Schachtstirnwand angeordnet ist und mittels eines etwa viertelkreisförmig gebogenen Übergangsstückes (52) an eine angenähert gerade Deckenschiene (54) angeschlossen ist, die ihrerseits an die zwischen Grube (10) und Schacht (16) endende Randschiene (12) der Grube (10) bodenseitig mit allenfalls geringem Höhenversatz anschließt.

3. Abdeckung nach Anspruch 1 oder 2, dadurch gekennzeichnet, daß die aufrechten Schenkel (32, 34) des U-förmigen Bahnabschnittes (30) parallel zu beiden Stirnflächen des Schachtes (16) in einem Abstand angeordnet sind, der gleich der über den Führunsrollen (50) liegenden Aufbauhöhe der Traggglieder (42) zuzüglich eines Sicherheitsabstandes ist.

4. Abdeckung nach einem der Ansprüche 1 bis 3, dadurch gekennzeichnet, daß sich an den grubenbenachbarten Schenkel (34) des U-förmigen Bahnabschnittes (30) mittels mindestens eines deckseitigen Bogenstückes (38) ein dritter aufrechter Schenkel (40) anschließt, der zwischen den beiden Schenkeln (32, 34) des U-förmigen Bahnabschnittes (30) angeordnet ist.

5. Abdeckung nach Anspruch 4, dadurch gekennzeichnet, daß im Übergangsbereich zwischen dem mindestens angenähert horizontalen Verlauf der deckseitigen Führungsbahn (Deckenschiene 54) für das Traggliederband (14) und dem anschließenden grubenabgewandten aufrechten Schenkel (32) des U-förmigen Bahnabschnittes (30) eine Kettenantriebsanordnung mit Antriebsmotor (60) vorgesehen ist, daß der Antriebsmotor (60) dicht unter der angenähert horizontalverlaufenden deckseitigen Führungsbahn (Deckenschiene 54) der Traggglieder (42) mit wenigstens angenähert horizontaler Antriebswelle angeordnet ist und daß der dritte Schenkel (40) vom grubenabgewandten Schenkel (32) einen Abstand höchstens gleich dem Abstand hat, den letzterer von der Schachtstirnwand aufweist.

6. Abdeckung nach einem der Ansprüche 1 bis 5, dadurch gekennzeichnet, daß das bodenseitige und/oder das deckseitige Bogenstück (36; 38) wenigstens angenähert halbkreisförmig ausgebildet ist.

7. Abdeckung nach einem der Ansprüche 1 bis 6, dadurch gekennzeichnet, daß die Höhe der Führungsanordnung (28) im Schacht (16) größer als deren in Längsrichtung der Grube (10) gemessenen Breite ist.

8. Abdeckung nach einem der Ansprüche 1 bis 8, dadurch gekennzeichnet, daß die Höhe des U-förmigen Bahnabschnittes (30) mindestens doppelt so groß wie der Abstand seiner beiden Schenkel (32, 34) ist.

9. Abdeckung nach einem der Ansprüche 1 bis 8, dadurch gekennzeichnet, daß die Höhe der Speichereinheit (18) das Zwei- bis Dreifache deren in Grubenlängsrichtung gemessener Breite beträgt.

10. Abdeckung nach einem der Ansprüche 1 bis 9, dadurch gekennzeichnet, daß die Speichereinheit (18) zwei vertikale Seitenplatten (22) aufweist, an denen die Führungsanordnungen (28) befestigt oder ausgebildet sind, und die mittels Querstreben (24, 26) und/oder einem Boden zu einer Bau-und Montageeinheit (20) miteinander verbunden sind, wobei mindestens eine Querstrebe (26) einen Antriebsmotor (60) und/oder die Lager (58) für eine die Kettenräder (62) tragende Antriebswelle (56) abstützt.

FIG.1

FIG.2

FIG.3

FIG.4

FIG.5

FIG.6

# Europäisches Patentamt

## EUROPÄISCHER RECHERCHENBERICHT

Nummer der Anmeldung

**EP 91 11 0157**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 247 463   (W. MAYER) <br> * Seite 9, Zeile 6 - Zeile 17; Abbildungen 1,3 * <br> – – – | 1-9 | E 04 H 5/06 <br> B 60 S 5/00 |
| Y | DE-U-8 405 371   (R. GRANDERATH) <br> * Seite 5, Zeile 18 - Seite 6, Zeile 3; Abbildungen 1-3 * <br> – – – | 1-9 | |
| A | EP-A-0 155 401   (RHEIN-BAYERN FAHRZEUGBAU GMBH) <br> * das ganze Dokument * <br> – – – | 1-10 | |
| A | EP-A-0 369 038   (R. GRANDERATH) <br> * Spalte 3, Zeile 28 - Spalte 4, Zeile 20; Abbildungen 1,2 * <br> – – – | 1-9 | |
| A | DE-B-1 434 647   (R. GRANDERRATH) <br> * Spalte 3, Zeile 53 - Zeile 58; Abbildung 1 * * Spalte 4, Zeile 42 - Zeile 48; Abbildung 2 * <br> – – – | 1 | |
| D,A | EP-A-0 115 087   (G. SCHULZ) <br> – – – | | |
| D,A | GB-A-2 060 754   (RHEIN-BAYERN FAHRZEUGBAU GMBH) <br> – – – – – | | |

| RECHERCHIERTE SACHGEBIETE (Int. Cl.5) |
|---|
| E 04 H <br> B 60 S <br> E 05 D |

Der vorliegende Recherchenbericht wurde für alle Patentansprüche erstellt

| Recherchenort | Abschlußdatum der Recherche | Prüfer |
|---|---|---|
| Den Haag | 12 September 91 | KAPPOS A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument